Europäisches Patentamt

European Patent Office

Office européen des brevets

(19)

(11) Veröffentlichungsnummer: **0 279 930**
**B1**

(12) EUROPÄISCHE PATENTSCHRIFT

(45) Veröffentlichungstag der Patentschrift:
16.08.90

(21) Anmeldenummer: 87118220.0

(22) Anmeldetag: 09.12.87

(51) Int. Cl.⁵: **B60T 17/08**, F16D 65/32

(54) **Beatmungsvorrichtung für einen Federspeicherbremszylinder.**

(30) Priorität: 12.02.87 DE 3704282

(43) Veröffentlichungstag der Anmeldung:
**31.08.88 Patentblatt 88/35**

(45) Bekanntmachung des Hinweises auf die Patenterteilung:
**16.08.90 Patentblatt 90/33**

(84) Benannte Vertragsstaaten:
**AT DE FR GB IT SE**

(56) Entgegenhaltungen:
**EP-A- 0 025 559**
**DE-A- 1 906 818**
**DE-A- 2 942 387**
**DE-A- 3 503 216**
**DE-B- 2 308 838**

(73) Patentinhaber: **WABCO Westinghouse**
**Fahrzeugbremsen GmbH, Am Lindener**
**Hafen 21 Postfach 91 12 80, D-3000 Hannover 91(DE)**

(72) Erfinder: **Ewald, Jürgen, Würzburgerstrasse 14,**
**D-3014 Laatzen 1(DE)**
Erfinder: **Glogowschek, Roland, Ing. grad., Skagenhof**
**Nr. 7, D-3000 Hannover 91(DE)**
Erfinder: **Frania, Josef, An der Bauerwiese 10 d,**
**D-3000 Hannover 91(DE)**
Erfinder: **Rischer, Ulrich, Gesmannstrasse 10,**
**D-3000 Hannover 91(DE)**

(74) Vertreter: **Schrödter, Manfred, WABCO Westinghouse**
**Fahrzeugbremsen GmbH Am Lindener**
**Hafen 21 Postfach 91 12 80, D-3000 Hannover 91(DE)**

## Beschreibung

Die Erfindung betrifft Beatmungseinrichtungen für einen Federspeicherbremszylinder nach den Oberbegriffen der Patentansprüche 1 und 2.

Derartige Beatmungseinrichtungen sind aus der DE 29 43 763 C2 bekannt, diejenige nach dem Oberbegriff des Patentanspruchs 2 insbesondere aus Spalte 7, Zeilen 7 bis 24.

Wird ein Federspeicherbremszylinder durch Druckentlastung seiner Lösekammer betätigt, so vergrößert sich infolge der dann eintretenden Entspannung der Speicherfeder und Verschiebung des Kolbens die Federkammer. Eine Beatmungseinrichtung dient dazu, bei dieser Vergrößerung der Federkammer in derselben keinen Unterdruck aufkommen zu lassen, der die Kraftabgabe der Speicherfeder behindern würde. Beatmungseinrichtungen der eingangs genannten Arten haben die Aufgabe, für eine Beatmung der Federkammer aus der Lösekammer (Patentanspruch 1) bzw. der Betriebsbremskammer eines mit dem Federspeicher-Bremszylinder baulich vereinigten Betriebsbremszylinders (Patentanspruch 2) zu sorgen. Da das den zuletzt genannten Kammern zugeführte Druckmittel in der vorgeschalteten Druckmittel-Beschaffungs- und Aufbereitungsanlage gereinigt und getrocknet ist, ist durch diese Art der Beatmung die Korrosions- und Verschmutzungsgefahr im Bereich der Federkammer und an der Speicherfeder entscheidend herabgesetzt.

Die bekannten Beatmungsvorrichtungen wirken derart, daß sich bei allen im Einsatz üblichen Füllgeschwindigkeiten der Lösekammer bzw. der Betriebsbremskammer mit Druckmittel in diesen Kammern trotz der Abströmung durch den Drosselkanal in die Federkammer ein Druck aufbaut, der ausreicht, den Ventilkörper gegen die Kraft des Federelements zu verschieben und dadurch das Ventil zu schließen sowie den Drosselkanaldurchgang zu sperren.

Als Drosselkanal dient bei den bekannten Beatmungsvorrichtungen der durch das Radialspiel zwischen dem Ventilkörper und seiner Führung im Kolben bestimmte Querschnitt. Diese Lösung setzt zur Erzielung gleichmäßiger Wirkung in Serie produzierter Federspeicherbremszylinder eine hohe Fertigungsgenauigkeit des Ventilkörpers und der Führung im Kolben mit entsprechend hohem Aufwand voraus.

Der Erfindung liegt deshalb die Aufgabe zugrunde, Beatmungsvorrichtungen der eingangs genannten Arten mit einfachen Mitteln so auszubilden, daß sie eine einfache und wenig aufwendige Herstellung bei gleichmäßigem Ansprechverhalten bei in Serie produzierter Federspeicherbremszylinder ermöglichen.

Diese Aufgabe wird durch die in den Patentansprüchen 1 und 2 angegebene Erfindung gelöst. Weiterbildungen und vorteilhafte Ausgestaltungen sind in den Unteransprüchen angegeben.

Infolge des erwähnten Radialspiels ist der Ventilkörper bei den bekannten Beatmungsvorrichtungen in seiner Führung ungenau zentriert. Dies hat zur Folge, daß auch ein gegebener Federspeicherbremszylinder der bekannten Bauart im Einsatz ein ungleichmäßiges Verhalten, insbesondere ungleichmäßiges Ansprechverhalten beim Lösen, zeigt. Diesen Nachteil vermeidet die Erfindung.

Es wäre denkbar, den Drosselkanal in Form einer Bohrung im Kolben anzuordnen. Auch diese Lösung würde jedoch einen hohen Aufwand bedeuten, da eine solche Bohrung zusätzlich und genau bearbeitet oder mit hohem Formverschleiß und hoher Ausschußquote genau eingegossen werden müßte. Auch gegenüber dieser möglichen Lösung weist die Erfindung die Vorteile großer Einfachheit und geringen Herstellaufwands auf.

Die Erfindung ermöglicht in einer ganz einfachen Bauform die Ausbildung des Drosselkanals als kalibrierten Durchbruch des Ventilkörpers.

In einer anderen Ausgestaltung, die eine kalibrierte (d.h. genaue) Ausbildung des Durchbruchs im Ventilkörper vermeidet, besteht der Drosselkanal aus einem (beliebig ungenau ausgebildeten) Durchbruch im Ventilkörper und der Durchlaßöffnung des Ventils (im geöffneten Zustand), wobei letztere als Drossel bemessen (bzw. kalibriert) ist.

Im Ventilkörper können auch mehrere Drosselkanäle der in den vorstehenden Absätzen beschriebenen Arten angeordnet sein. Die Anordnung mehrerer Drosselkanäle macht eine erfindungsgemäße Beatmungsvorrichtung vielseitig verwendbar, da sie durch Dichtsetzen bzw. Öffnen verschiedener Anzahl von Drosselkanälen für eine Vielzahl von Federspeichertypen einsetzbar ist.

Sowohl wenn die Beatmung der Federkammer aus der Lösekammer erfolgt als auch wenn sie aus der Betriebsbremskammer erfolgt, kann der Ventilkörper in seiner Führung nach Art eines Kolbens in einem Zylinder angeordnet sein, in welchem Fall die Führung als einerseits mit der Lösekammer bzw. der Betriebsbremskammer und andererseits mit der Federkammer verbundene zylindrische Kolbenbohrung ausgebildet ist. Es können auch mehrere dieser Anordnungen auf den Kolben verteilt sein, beispielsweise auf dem gleichen Durchmesser in Umfangsrichtung. Bei beiden Arten der Beatmung der Federkammer kann der Ventilkörper auch nach Art eines Ringkolbens ausgebildet sein, wobei seine Führung als Ringnut ausgebildet ist, welche entsprechend mit den soeben genannten Kammern verbunden ist. Als Schließglied dient in allen erwähnten Fällen eine den Hub des Ventilkörpers in Richtung Federkammer begrenzende Schulter des Kolbens.

Eine Fertigungsvereinfachung, insbesondere da im Falle der mechanischen Bearbeitung der Kolben zusätzliche Einspannung(en) desselben vermeidend, ergibt sich, wenn die Ringnut koaxial zum Kolben angeordnet ist.

Insbesondere wenn die Beatmung der Federkammer aus der Betriebsbremskammer vorgesehen ist, lassen sich den vorstehend beschriebenen Ausgestaltungen des Ventilkörpers und seiner Führung entsprechende Ausgestaltungen im Hohlraum einer am Kolben etwa vorhandenen hohlen Kolbenstange unterbringen, wenn letztere abgedichtet in die Betriebsbremskammer eindringt. Die das Schließglied des Ventils bildende Schulter am Kolben, die in diesem Fall in den Hohlraum der Kolbenstange eindringt, kann an der Kolbenstange angeordnet sein.

Eine Vereinfachung bieten diese Ausgestaltungen insbesondere, wenn sie an dem in die Betriebsbremskammer eindringenden Ende der Kolbenstange angeordnet sind.

Die im vorigen Absatz erwähnten Ausgestaltungen des Ventilkörpers und seiner Führung können auch in einem etwa an dem in die Betriebsbremskammer eindringenden Ende der hohlen Kolbenstange vorgesehenen eingesetzten Druckstück mit hohlem Innenraum angeordnet sein. Ein solches Druckstück ist zur Übertragung der Kolbenkraft bekannt. Die anderen Teile (neben dem Druckstück) des Kolbens, ggfs. einschließlich der Kolbenstange, können in diesem Fall besonders einfach ausgebildet sein. Zur weiteren Vereinfachung dieser Teile kann die das Schließglied des Ventils bildende Schulter am Druckstück ausgebildet sein.

Insbesondere in den Ausgestaltungen mit nach Art eines Ringkolbens ausgebildetem und in einer Ringnut geführtem Ventilkörper kann zur Vereinfachung das Druckstück aus einem Außenteil und einem Innenteil bestehen, zwischen denen die Ringnut gebildet ist. Die bereits erwähnte Schulter kann in diesem Fall am Außenteil oder am Innenteil des Druckstücks angeordnet sein.

Zur Vereinfachung kann bei sämtlichen vorstehend erwähnten Ausgestaltungen das den Ventilkörper in Öffnungsrichtung des Ventils vorspannende Federelement sich zwischen der als Schließglied des Ventils dienenden Schulter oder einer weiteren Schulter des Kolbens und dem Ventilkörper abstützen. für die genannte weitere Schulter gelten die oben erwähnten Anordnungsmöglichkeiten der das Schließglied bildenden Schulter entsprechend.

Der Ventilkörper kann zweiteilig aus einem Dichtelement und einem dieses abgedichtet durchdringenden Innenteil, wie im einzelnen im Patentanspruch 19 angegeben, bestehen. Diese Ausgestaltung bietet eine vorteilhaft kostengünstige Lösung mit vorteilhaften Fortbildungsmöglichkeiten. In einer Fortbildung nach dem Patentanspruch 20 wird das zur Bildung des Ventils herangezogene Ende des Dichtelements, welches Ende in der Regel eine Dichtlippe oder Dichtfläche ist, nach Zusammendrücken um das Maß "b" durch weitersteigenden Druck in der Betriebsbremskammer nicht zusätzlich belastet. Durch Auslegung des Maßes "b" kann also die Belastung des fraglichen Endes des Dichtelementes auf einen Höchstwert begrenzt werden. Damit lassen sich eine verbesserte Betriebssicherheit und eine Erhöhung der Lebensdauer der erfindungsgemäßen Beatmungseinrichtung erzielen. Dieser Effekt wird gefördert, wenn für das Innenteil ein Werkstoff mit geringerer Dehnung, also größerem Elastizitätsmodul, als für das Dichtelement eingesetzt wird; in Betracht kommen insoweit beispielsweise ein metallischer Werkstoff oder ein Hartkunststoff wie POM oder Delrin.

Die Abdichtung des Ventilkörpers gegenüber seiner Führung im Kolben kann, je nach Ausgestaltung, auf alle bei Kolben bzw. Ringkolben üblichen Arten erfolgen. Eine besonders kostengünstige Ausgestaltung ergibt sich, wenn der in der zylindrischen Bohrung angeordnete Ventilkörper im wesentlichen eine radial nach außen gerichtete bzw. der nach Art eines Ringkolbens ausgebildete Ventilkörper je eine im wesentlichen radial nach außen und nach innen gerichtete Dichtlippe aufweisen, welche umlaufen und sich axial in Richtung der Lösekammer bzw. der Betriebsbremskammer erstrecken. In diesen Ausgestaltungen entsprechen, abgesehen von dem Durchbruch zur Bildung des Drosselkanals, im Querschnitt der in der zylindrischen Kolbenbohrung angeordnete Ventilkörper einer Topfmanschette und der als Ringkolben ausgebildete Ventilkörper einer Nutmanschette, wie sie (auch aus anderen technische Gebieten) bekannt sind. Diese Ausgestaltungen bieten zusätzlich den Vorteil erhöhter Funktionssicherheit, da die Dichtlippe bzw. die Dichtlippen einerseits druckentlastet leichtgängig sind und dadurch schnelles Ansprechen sichern und andererseits durch den sich in der Lösekammer bzw. in der Betriebsbremskammer aufbauenden Druck radial gegen die Führung im Kolben gepreßt werden mit verstärkter Dichtwirkung als Folge.

Das vorstehend für die Ausbildung des Ventilkörpers nach Art einer Nutmanschette Gesagte gilt für die Ausbildung des Dichtelements des oben erwähnten zweiteiligen Ventilkörpers entsprechend, wobei die nach innen gerichtete Dichtlippe die Abdichtung zwischen Dichtelement und Innenteil übernimmt.

Das zur Bildung des Ventils dienende, auf das Schließglied zu gerichtete Ende des Ventilkörpers bzw. des Dichtelements des zweiteiligen Ventilkörpers kann als konzentrisch zu der Mündung des den Ventilkörper bzw. das Dichtelement durchdringenden wenigstens Teiles des Drosselkanals angeordnete und um die Mündung herumlaufende Dichtlippe oder Dichtfläche ausgebildet sein. In diesem Fall stellen die Dichtlippe und das Schließglied für jeden Drosselkanal ein eigenes Ventil dar.

Das vorstehend erwähnte Ende des Ventilkörpers bzw. des Dichtelements des zweiteiligen Ventilkörpers kann aber auch als je ein sich axial erstreckender umlaufender radial äußerer und radial innerer Dichtsitz, insbesondere Dichtlippe, ausgebildet sein, die zwischen sich eine Ringfläche einschließen, in welche der wenigstens Teil des Drosselkanls bzw. die wenigstens Teile der Drosselkanäle münden. In diesem Fall ist für alle etwa vorhandenen Drosselkanäle ein gemeinsames (ringförmiges) Ventil vorgesehen.

Eine weitere Vereinfachung wird bei sämtlichen vorstehend erwähnten Ausgestaltungen ermöglicht, wenn das Federelement als axial zwischen dem Ventilkörper und einer Schulter des Kolbens angeordneter Federring ausgebildet ist, welcher bei Druckbeaufschlagung der Lösekammer bzw. der Betriebsbremskammer von dem Ventilkörper plangepreßt wird und dadurch zugleich als Schließglied des Ventils dient. Es versteht sich, daß je nach Ausgestaltung die erwähnte Schulter des Kolbens auch an der Kolbenstange bzw. am Druckstück angeordnet sein kann. In bevorzugter Ausführungsform obliegt dieser Schulter bei plangepreßtem Federring auch die Begrenzung des Hubs des Ventilkörpers in Richtung Federkammer, in welchem Fall die Ausbildung einer weiteren Schulter zum Zwecke dieser Begrenzung vermieden wird.

Die Erfindung wird nachstehend anhand von in Zeichnungen dargestellten Ausführungsbeispielen erläutert.

Unter durchgehender Verwendung gleicher Bezugszeichen für Positionen mit gleichen Funktionen zeigen:

**Fig. 1** eine Beatmungsvorrichtung für einen Federspeicherbremszylinder zur Beatmung der Federkammer aus der Lösekammer,

**Fig. 2** in der oberen Figurenhälfte eine andere Ausgestaltung der Beatmungsvorrichtung nach Fig. 1 und in der unteren Figurenhälfte eine Beatmungsvorrichtung für einen Federspeicherbremszylinder zur Beatmung der Federkammer aus der Betriebsbremskammer eines mit dem Federspeicherbremszylinder baulich vereinigten Betriebsbremszylinders,

**Fig. 2a** in ausschnittsweiser Vergrößerung Einzelheiten des Ausführungsbeispiels nach Fig. 2,

**Fig. 3** eine andere Ausgestaltung einer Beatmungseinrichtung zur Beatmung der Federkammer aus der Betriebsbremskammer,

**Fig. 4** eine Beatmungseinrichtung entsprechend Fig. 3 mit einem zweiteiligen Ventilkörper,

**Fig. 4a** einen Querschnitt entlang der Linie A-A in Fig. 4,

**Fig. 4b** vergrößert das Detail X aus Fig. 4,

**Fig. 5 und 6** weitere Ausgestaltungen der Beatmungseinrichtung zur Beatmung der Federkammer aus der Betriebsbremskammer.

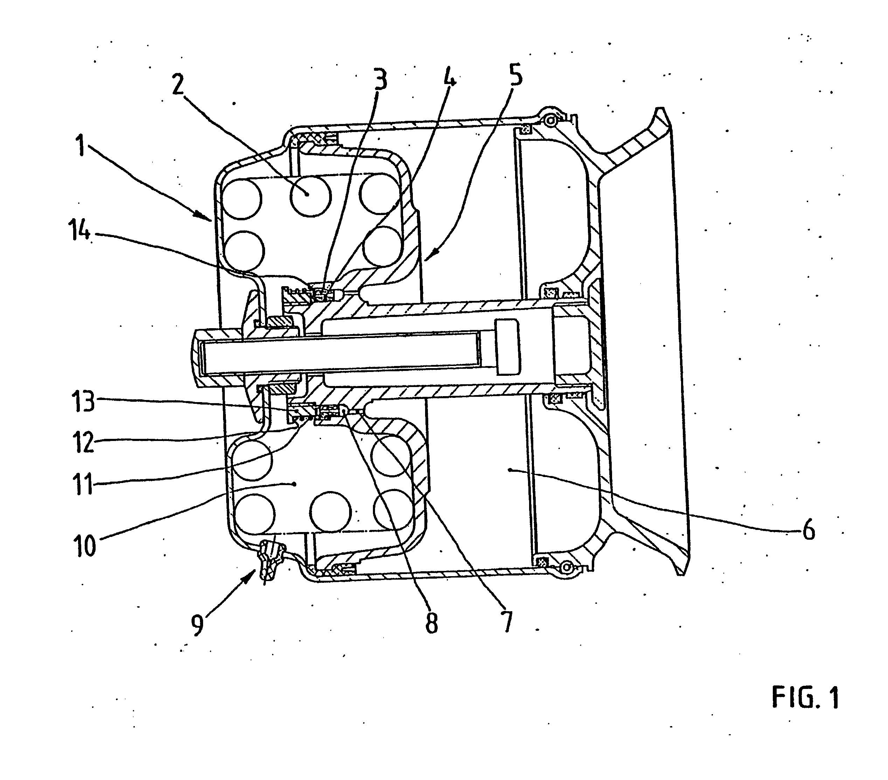

Fig. 1 zeigt im Schnitt eine Beatmungseinrichtung für einen generell mit (1) bezeichneten Federspeicherbremszylinder mit einem genereil mit (5) bezeichneten, durch eine Speicherfeder (2) betätigbaren Kolben, der den Federspeicherbremszylinder (1) in eine Lösekammer (6) und eine die Speicherfeder (2) aufnehmende Federkammer (10) aufteilt.

Ein solcher Federspeicherbremszylinder ist bekannt. Durch Beaufschlagung der Lösekammer (6) mit einem Druck, der hoch genug ist, die Kraft der Speicherfeder (2) zu überwinden, wird der Kolben (5) unter Zusammendrückung der Speicherfeder (2) auf die Zeichnung gesehen, nach links verschoben, höchstens jedoch bis zum Erreichen einer Lösestellung. Bei Druckentlastung der Lösekammer (6) entspannt sich die Speicherfeder (2) und verschiebt dabei den Kolben in eine Bremsstellung. Bei Verschiebung des Kolbens (5) nach links in Richtung der Lösestellung wird die Bildung eines Überdrucks in der Federkammer (10) mittels eines Rückschlagventils (9) verhindert, welches Druckmittel aus der Federkammer (10) in die Atmosphäre oder einen überdrucklosen Auffangraum abströmen läßt, eine Strömung in entgegengesetzter Richtung jedoch sperrt. Ein Unterdruck in der Federkammer (10), der die Kraftentfaltung der Speicherfeder (2) behindern könnte, wird durch die Beatmungsvorrichtung verhindert.

Die Beatmungseinrichtung weist wenigstens einen im Kolben (5) angeordneten Drosselkanal (4) auf, über welchen bei Druckentlastung der Lösekammer (6) eine Beatmung der Federkammer (10) aus der Lösekammer (6) herbeiführbar ist. Der Drosselkanal (4) durchdringt einen Ventilkörper (3), der abgedichtet im Kolben verschiebbar geführt ist und mit einem am Kolben (5) angeordneten Schließglied (14) wenigstens ein Ventil (3, 14) zum Öffnen und Absperren des Drosselkanaldurchgangs bildet. Der Ventilkörper (3) ist durch ein Federelement (11) in Öffnungsrichtung des Ventils (3, 14) und durch den Druck in der Lösekammer (6) in Schließrichtung des Ventils (3, 14) vorgespannt.

In den Kolben (5) dringt aus Richtung der Federkammer (10) eine koaxial zum Kolben (5) angeordnete umlaufende Ringnut (8) ein, die einerseits über einen oder mehrere Kolbendurchbrüche (7) mit der Lösekammer (6) und andererseits mit der Federkammer (10) verbunden ist. In der Ringnut (8) ist der nach Art eines Ringkolbens ausgebildete Ventilkörper (3) geführt. Seine Verschiebbarkeit ist in Richtung der Federkammer (10) durch eine am Kolben angeordnete Schulter begrenzt, die zugleich das Schließglied (14) des Ventils (3, 14) bildet. Um die Einführung des Ventilkörpers (3) in die Ringnut (8) zu ermöglichen, ist die Schulter als Stirnfläche eines ringförmigen Kolbenteils (13) ausgebildet, welches nach dem Einbau des Ventilkörpers (3) in die Ringnut (8) nach Art einer Mutter auf ein nicht näher bezeichnetes Gegenstück des Kolbens aufgeschraubt wird.

Das Federelement (11) ist als Schraubenfeder ausgebildet und stützt sich zwischen dem Ventilkörper (3) und einer am Kolben (5), genauer: am ringförmigen Kolbenteil (13) ausgebildeten weiteren Schulter (12) ab. Das Ventil (3, 14) wird durch Verschieben des Ventilkörpers (3) geöffnet und geschlossen. Der Drosselkanal (4) durchdringt, wie oben schon gesagt, den Ventilkörper (3). Der Drosselkanal (4) mündet einerseits in das lösekammerseitige Ende der Ringnut (8) und andererseits, je nach axialer Lage des Schließglieds (14) zur Ringnut (8) in das federkammerseitige Ende der Ringnut (8) oder in die Federkammer (10) direkt. Die federkammerseitige Mündung des Drosselkanals (4) ist dabei so am Ventilkörper (3) angeordnet, daß der Drosselkanaldurchgang beim Öffnen und Schließen des Ventils (3, 14) ebenfalls geöffnet bzw. abgesperrt wird.

Ein nicht näher bezeichneter Anschlag zur Begrenzung der Verschiebbarkeit des Ventilkörpers (3) in Richtung der Lösekammer (6) ist am Kolben (5) in einer Mantelfläche der Ringnut (8) vorgesehen. Auf diese Weise ist die Verschiebbarkeit des Ventilkörpers (3) durch zwei Anschläge definiert. Der letztere Anschlag kann jedoch ohne Beeinträchtigung der Wirkung des Ausführungsbeispiels entfallen.

Der bisher erwähnte eine Drosselkanal (4) muß ausreichend bemessen sein, die nachstehend beschriebene Wirkung sicherzustellen. Es können aber im Ventilkörper (3) auch mehrer Drosselkanäle angeordnet sein, für die das für den wenigstens einen Drosselkanal (4) oben und nachstehend Gesagte entsprechend gilt. Die Anordnung mehrerer Drosselkanäle macht eine Beatmungseinrichtung vielseitig einsetzbar da sie durch Verschließen einzelner Kanäle an verschiedene Typen Federspeicherbremszylinder anpaßbar ist.

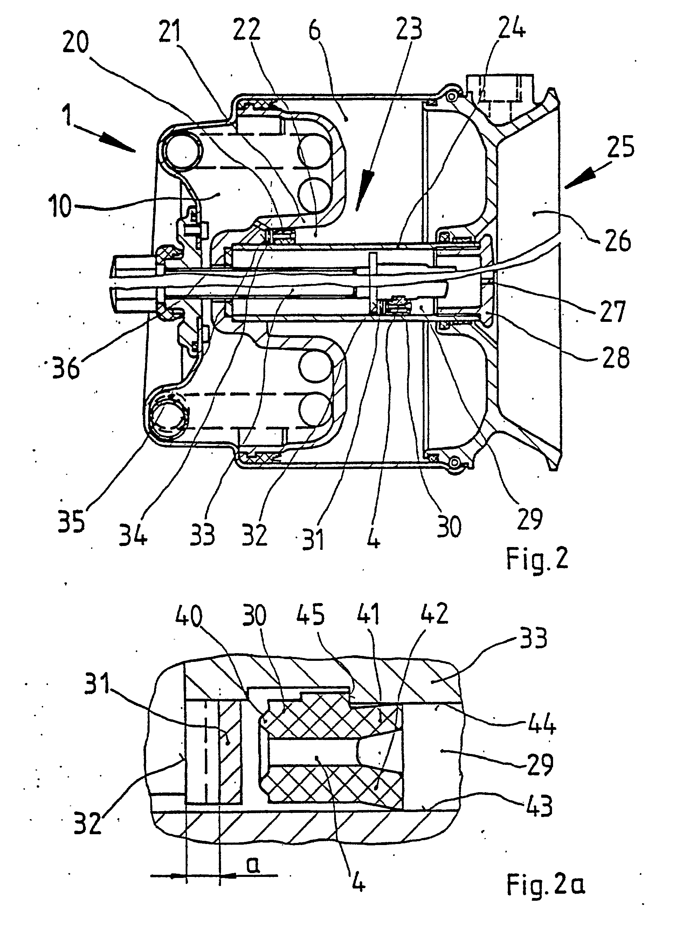

Hinsichtlich der Ausbildung des Ventilkörpers (3) im Detail gilt das weiter unten zu Fig. 2a Gesagte entsprechend.

Die Beatmungsvorrichtung wirkt in Verbindung mit dem Federspeicherbremszylinder (1) wie folgt:

Ist die Lösekammer (6) mit einem die Kraft des Federelements (11) überwindenden Druck beaufschlagt, so ist der Ventilkörper (3) durch diesen Druck nach links verschoben. Dabei ist dieser mit einem als Ventilsitz ausgebildeten Bereich gegen das Schließglied (14) gedrückt und das Ventil (3, 14) geschlossen. Dadurch sind der Drosselkanaldurchgang gesperrt und Lösekammer (6) sowie Federkammer (10) voneinander getrennt.

Wird jetzt der Druck in der Lösekammer (6) abgesenkt, so verschiebt sich von einem bestimmten Druckwert, dem Lösedruck, ab der Kolben (5) nach rechts, wodurch sich in der Federkammer (10) ein Unterdruck bildet, der die von dem Druck in der Lösekammer (6) auf den Ventilkörper (3) ausgeübte Kraft unterstützt. Von einem bestimmten Druckwert ab überwiegt die Kraft des Federelements (11) auf den Ventilkörper (3) die von dem Druck und dem Unterdruck auf den Ventilkörper (3) ausgeübte Kraft mit der Folge, daß der Ventilkörper (3) nach rechts verschoben, das Ventil (3, 14) und damit der Drosselkanal (4) geöffnet werden und die Federkammer (10) aus der Lösekammer (6) beatmet wird.

Nach dem Öffnen des Ventils (3, 14) entweicht ein etwaiger Restdruck in der Lösekammer (6) auf jeden Fall über den Drosselkanal (4), das Ventil (3, 14), die Federkammer (10) und das Rückschlagventil (9), so daß der Federspeicherbremszylinder mit Sicherheit seine Vollbremsstellung annimmt.

Wird der Lösekammer (6) jetzt wieder Druckmittel zugeführt, so kann dieses durch den Drosselkanal (4) und weiter auf dem soeben erwähnten Wege abströmen. Ist hingegen die Zuströmgeschwindigkeit größer als die durch den Querschnitt des Drosselkanals (4) ermöglichte Abströmgeschwindigkeit, so baut sich in der Lösekammer (6) ein Druck auf, der bei fortgesetztem Druckmittelzufluß auf den zur Überwindung der Kraft des Federelements (11) erforderlichen Wert ansteigt und zum Schließen des Ventils (3, 14) führt. Ein weiterer Druckaufbau in der Lösekammer (6) zur Verschiebung des Kolbens (5) in Richtung der Lösestellung ist anschließend ohne jegliche Beeinflussung durch die Beatmungseinrichtung möglich.

Der Querschnitt des Drosselkanals (4) bzw., gegebenenfalls, der Drosselkanäle ist so kalibriert, daß bei allen im praktischen Einsatz auftretenden Zuströmgeschwindigkeiten ein sicheres Schließen des Ventils (3, 14) und damit die volle Funktionsfähigkeit des Federspeicherbremszylinders (1) sichergestellt ist.

Der Fachmann hat es in der Hand, durch Auslegung des Federelements (11) und der Größen der dem Druck in der Lösekammer (6) sowie dem Unterdruck in der Federkammer (10) ausgesetzten Flächen des Ventilkörpers (3) den Öffnungsbeginn des Ventils (3, 14) (Öffnungsdruck) bei Druckentlastung der Lösekammer (6) festzulegen.

Es liegt auf der Hand, daß die Beatmungseinrichtung statt koaxial zum Kolben (5) auch außermittig in demselben angeordnet sein kann. Dabei kann der Ventilkörper (3) mit unveränderter Wirkung auch anders als achsparallel oder achsgleich zum Kolben (5) verschiebbar angeordnet sein. Es können auch mehrere Beatmungseinrichtungen gemäß dem Ausführungsbeispiel auf dem Kolben (5) verteilt sein.

In Fig. 2 ist ein wieder mit (1) bezeichneter Federspeicherbremszylinder der vorstehend beschriebenen in bekannter Weise mit einem angedeuteten und mit (25) bezeichneten Betriebsbremszylinder baulich vereinigt. Der hier mit (23) bezeichnete Kolben des Federspeicherbremszylinders (1) besteht aus einem Kolbenkörper (21), einer hohlen Kolbenstange (24, 28), die ihrerseits aus einem Körper (24) und einem Druckstück (28) besteht und einer Lösespindel (33). Die Kolbenstange (24, 28) dringt abgedichtet in die durch (26) symbolisierte Betriebsbremskammer des Betriebsbremszylinders (25) ein. An ihrem in die Betriebsbremskammer (26) eindringenden Ende enthält sie das abgedichtet eingesetzte Druckstück (28), das zur Übertragung der Kolbenkraft des Kolbens (23) dient. Die Lösespindel (33) dringt mit Radialspiel durch den Kolbenkörper (21) in den Hohlraum der Kolbenstange (24, 28) ein und dient in bekannter Weise zum Lösen des Federspeicherbremszylinders (1) auf mechanischem Wege bei Ausfall der Druckmittelversorgung. Die Lösespindel (33) ist, anders als die anderen erwähnten Bauteile des Kolbens (23), im Normalbetrieb an dem nicht näher bezeichneten Gehäuse des Federspeicherbremszylinders (1) ortsfest.

Fig. 2 zeigt in der oberen und in der unteren Figurenhälfte jeweils verschiedene Auführungsformen.

In der in der oberen Figurenhälfte dargestellten Beatmungseinrichtung ist die den wieder nach Art eines Ringkolbens ausgebildeten Ventilkörper (20) aufnehmende Ringnut (22) zwischen dem Außenumfang der Kolbenstange (24, 28) und einem diese mantelartig umhüllenden Teil des Kolbenkörpers (21) gebildet. Die Ringnut (22) ist zur Lösekammer (6) hin offen, so daß der Einbau des Ventilkörpers (20) aus Richtung dieser Kammer erfolgt. Zur Verbindung der Ringnut (22) mit der Federkammer (10) ist ein Durchbruch (36) im Kolben (23), genauer: im Kolbenkörper (21), vorgesehen. Im Grund der Ringnut (22) ist am Kolben (23), genauer: am Kolbenkörper (21), eine Schulter (35) vorgesehen.

Das Federelement ist als axial zwischen dem Ventilkörper (20) und der Schulter (35) angeordneter Federring (34) ausgebildet. Hinsichtlich seiner Einzelheiten gilt das unten bei Fig. 2a zum Federring (31) Gesagte entsprechend. Der Federring (34) wird bei ausreichend hoher Druckbeaufschlagung der Lösekammer (6) von dem Ventilkörper (20) gegen die Schulter (35) gedrückt, dabei plangepreßt und dient in diesem Zustand zugleich als Schließglied des hier mit (20, 34) zu bezeichnenden Ventils.

In seiner Wirkung entspricht dieses Ausführungsbeispiel demjenigen nach Fig. 1.

Bei dem in der unteren Figurenhälfte der Fig. 2 dargestellten Ausführungsbeispiel erfolgt die Beatmung der Federkammer (10) aus der Betriebsbremskammer (26).

Der Hohlraum der Kolbenstange (24, 28) ist in diesem Fall einerseits mit der Betriebsbremskammer (26) und andererseits mit der Federkammer (10) verbunden. Der Verbindung mit der Betriebsbremskammer dient ein Durchbruch (27) im Druckstück (28), während der Verbindung mit der Federkammer (10) das Radialspiel an der nicht näher bezeichneten Durchführung der Lösespindel (33) durch den Kolbenkörper (21) dient.

Abgesehen von dem abweichenden Beatmungsweg und den nachstehenden Unterschieden entspricht dieses Ausführungsbeispiel dem in der oberen Figurenhälfte dargestellten.

Die den hier mit (30) bezeichneten Ventilkörper aufnehmende Ringnut (29) ist im Hohlraum der Kolbenstange (24, 28), und zwar zwischen deren innerer Mantelfläche und einer äußeren Mantelfläche der Lösespindel (33) ausgebildet. Etwa aus der letztgenannten Mantelfläche ragt im wesentlichen radial eine Schulter (32) hervor, gegen die der hier mit (31) bezeichnete Federring von dem Ventilkörper (30) gedrückt wird, wenn die Betriebsbremskammer (26) mit ausreichend hohem Druck beaufschlagt wird. Für die Zusammenarbeit zwischen Ventilkörper (30) und Federring (31) als Ventil (30, 31) gilt das oben Gesagte entsprechend.

Bei diesem Ausführungsbeispiel besteht infolge der großen Relativbewegung im Normalbetrieb zwischen der Lösespindel (33) und den anderen Bauteilen des Kolbens (23) das Risiko, daß der Ventilkörper (30) von der Lösespindel (33) abgestreift wird und daß dadurch der Federring (31) eine undefinierte Lage im Hohlraum der Kolbenstange (24, 28) annimmt und die Funktion gefährdet. Um dies zu vermeiden, ist die Verschiebbarkeit des Ventilkörpers (30) auf der Lösespindel (33) in Richtung der Betriebsbremskammer (26) begrenzt.

Fig. 2a zeigt in vergrößertem Ausschnitt Einzelteile des Ausführungsbeispiels gemäß der unteren Figurenhälfte der Fig. 2, welche in entsprechender Anwendung auch für die früheren und folgenden Ausführungsbeispiele gelten.

Der Ventilkörper (30) ist durch eine äußere umlaufende Dichtlippe (42) gegenüber der äußeren Mantelfläche (43) der Ringnut (29) und durch eine innere umlaufende Dichtlippe (41) gegenüber der inneren Mantelfläche (44) der Ringnut (29) abgedichtet. Die Dichtlippen (41) und (42) sind im wesentlichen radial nach außen bzw. radial nach innen gerichtet, im wesentlichen am Außenumfang bzw. am Innenumfang des Ventilkörpers (30) angeordnet und erstrecken sich in dessen axialer Richtung auf die Betriebsbremskammer zu. Der Ventilkörper (30) ist also nach Art einer Nutmanschette ausgebildet. Der Drosselkanal (4) mündet betriebsbremskammerseitig radial zwischen den Dichtlippen (41) und (42) und federkammerseitig innerhalb eines als umlaufende Dichtlippe (40) ausgebildeten Ventil sitzes am Ventilkörper (30). Dem Drosselkanal (4) bzw., gegebenenfalls, jedem Drosselkanal ist also ein eigenes Ventil (30, 31), verkörpert durch die Zusammenarbeit des Ventilsitzes (Dichtlippe) (40) mit dem Federring (31), zugeordnet. In nicht dargestellter Weise kann der Ventilkörper zur Bildung des Ventils auch einen radial äußeren und einen radial inneren umlaufenden Ventilsitz aufweisen, die zwischen sich eine Ringfläche einschließen, in welche der Drosselkanal (4) bzw. gegebenenfalls die Drosselkanäle münden; in diesem Fall wäre bei einer Mehrzahl von Drosselkanälen allen ein gemeinsames Ventil zugeordnet. Die zuletzt erwähnten Ventilsitze können ebenfalls als Lippen ausgeführt sein. Alle erwähnten Ventilsitze können aber auch in nicht dargestellter Weise ohne Lippen als flächige Sitze ausgebildet sein.

Zur Bildung eines die Verschiebbarkeit des Federkörpers (30) in Richtung der Betriebsbremskammer begrenzenden Anschlags weist die Lösespindel (33) in der die innere Mantelfläche (44) der Ringnut (29) bildenden Mantelfläche einen umlaufenden Einstich auf, dessen eine axiale Flanke (45) den Anschlag bildet. Das Maß des lichten Innendurchmessers des Ventilkörpers (30) ist so festgelegt, daß der Ventilkörper (30) über die Mantelfläche der Lösespindel (33) (d.h. die innere Mantelfläche (44) der Ringnut (29)) geschoben werden kann, bis er mit seinem lichten Durchmesser in den Einstich springt. Eine dem Anschlag (45) zugewandte Schulter des Ventilkörpers (30) bildet dann die Anschlagfläche des letzteren.

Die Darstellung zeigt auch Einzelheiten des das Federelement bildenden Federrings (31), und zwar im entspannten Zustand, d.h. bei geöffnetem Ventil (30, 31). In diesem Zustand ist der Federring (31) um das Maß "a" axial wellig. Bei Druckbeaufschlagung des Ventilkörpers (30) aus der Betriebsbremskammer wird der Federring (31) durch den Ventilkörper (30) unter Einebnung der genannten Welligkeit plangepreßt mit den oben näher beschriebenen Folgen.

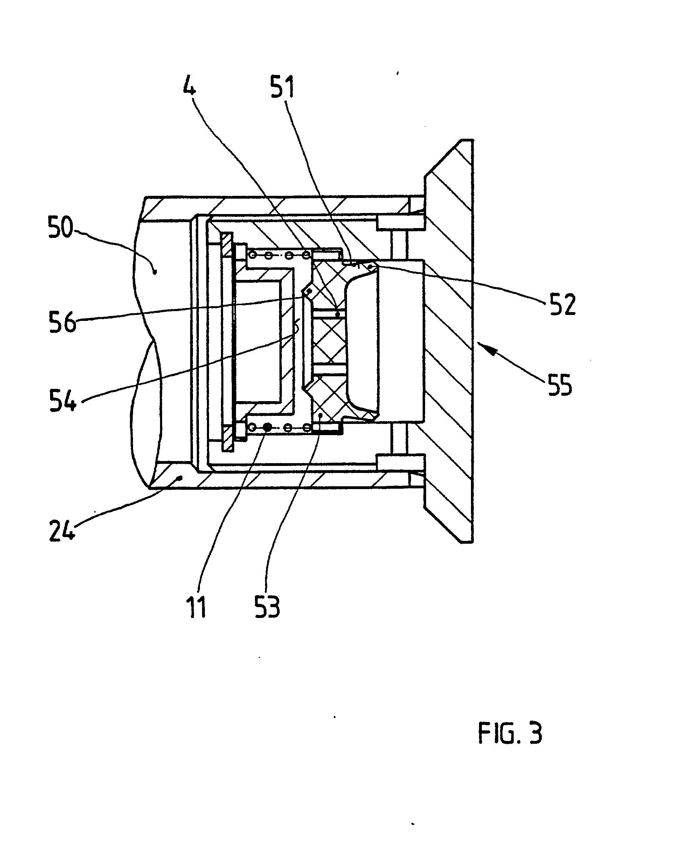

Die Figuren 3 bis 6 zeigen in Ausschnitten wieder Beatmungsvorrichtungen für einen mit einem Betriebsbremszylinder baulich vereinigten Federspeicherbremszylinder zur Beatmung der Federkammer aus der Betriebsbremskammer.

In Fig. 3 ist der durch das Bezugszeichen (50) angedeutete Hohlraum der Kolbenstange (24, 55) einerseits (über nicht näher bezeichnete Durchbrüche im Körper (24) der Kolbenstange (24, 55) und in dem in diese eingesetzten Druckstück (55)) mit der Betriebsbremskammer und andererseits mit der Federkammer verbunden.

In dieser Ausgestaltung ist der Ventilkörper (53) in einem als zylindrische Bohrung ausgebildeten Bereich (51) der Kolbenstange (24, 55) verschiebbar geführt, wobei als Schließglied (54) des Ventils (53, 54) eine in den Hohlraum der Kolbenstange (24, 55) hineinragende und den Hub des Ventilkörpers (53) in Richtung Federkammer begrenzende Schulter des Kolbens dient.

Der als zylindrische Bohrung ausgebildete Bereich (51) der Kolbenstange (24, 55) sowie die als Schließglied (54) dienende Schulter sind an dem Druckstück (55) angeordnet.

Der Ventilkörper (53) kann in diesem Fall als nach Art eines Kolbens in einem Zylinder angeordnet bezeichnet werden. Zu seiner Abdichtung weist der Ventilkörper (53) eine radial im wesentlichen nach außen gerichtete, sich axial in Richtung der Betriebsbremskammer erstreckende umlaufende Dichtlippe (52) auf, die mit dem zylindrischen Bereich (51) in Eingriff steht und bei Aufbau eines ausreichend hohen Drucks in der Betriebsbremskammer von diesem Druck mit guter Dichtwirkung gegen den zylindrischen Bereich (51) gedrückt wird. Der Ventilkörper (53) ist also nach Art einer Topfmanschette ausgebildet.

Der hier mit (56) bezeichnete Dichtsitz am Ventilkörper (53) zur Bildung des Ventils (53, 54) schließt eine Ringfläche ein, in die die dargestellten mehreren Drosselkanäle (4) federkammerseitig münden.

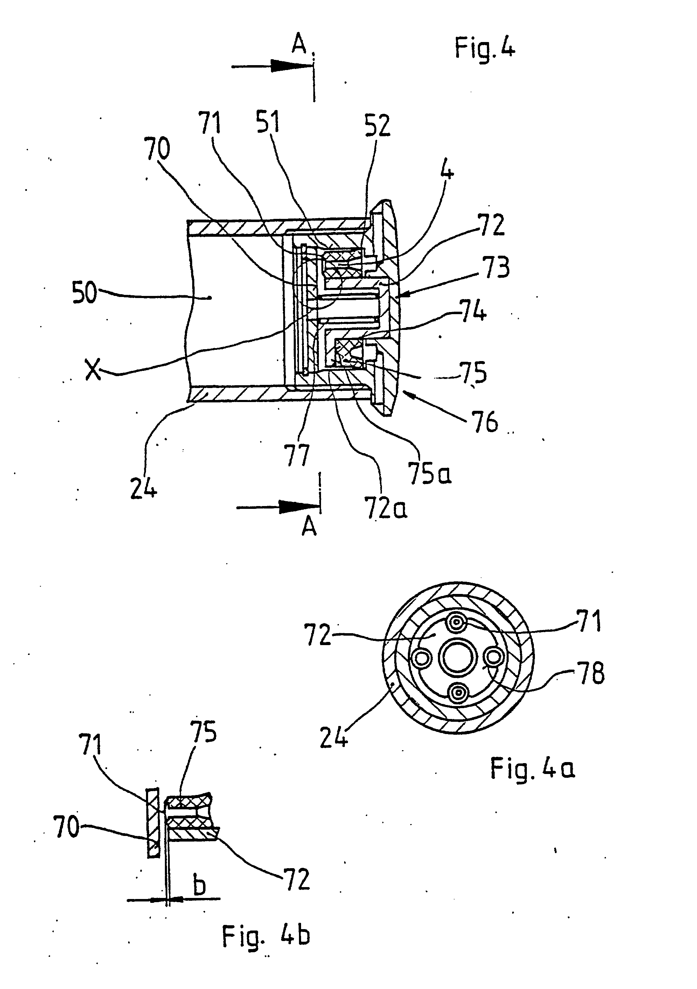

Die Figuren 4 bis 4b zeigen eine Beatmungsvorrichtung mit einem zweiteiligen Ventilkörper (73). Der Ventilkörper (73) besteht aus einem ringförmigen Dichtelement (75) und einem dieses abgedichtet durchdringenden Innenteil (72). Der Drosselkanal (4) ist im Dichtelement (75) angeordnet, während sich das hier mit (77) bezeichnete Federelement am Innenteil (72) abstützt.

Die hohle Kolbenstange (24, 76) besteht aus dem Körper (24) und dem hier mit (76) bezeichneten Druckstück. Als Schließglied (70) das hier mit (73, 70) bezeichneten Ventils dient wieder eine in den Hohlraum der Kolbenstange (24, 76) hineinragende Schulter des Kolbens. Das Ventil (73, 70) wird von dem Schließglied (70) und dem auf dieses zu gerichteten Ende des Dichtelements (75) gebildet. Das Dichtelement (75) weist zu diesem Zweck an diesem Ende eine um die Mündung des Drosselkanals (4) herumlaufende, d.h. diese Mündung einfassende, Dichtlippe (41) auf.

Das Dichtelement (75) und das Innenteil (72) stehen über eine Schulter (75a) am Dichtelement (75) und eine Gegenschulter (72a) am Innenteil (72) derart im Eingriff, daß das Innenteil (72) das Dichtelement (75) in Öffnungsrichtung des Ventils (73, 70) mitnimmt und das Dichtelement (75) die an ihm vom Druck in der Betriebsbremskammer hervorgerufene Kraft auf das Innenteil (72) überträgt (mit anderen Worten: bei ausreichend hohem Druck in der Betriebsbremskammer das Innenteil (72) in Schließrichtung des Ventils (73, 70) mitnimmt).

Das Dichtelement (75) ist nach Art einer Nutmanschette ausgebildet und weist eine im wesentlichen radial nach außen gerichtete umlaufende Dichtlippe (52) sowie eine im wesentlichen radial nach innen gerichtete umlaufende Dichtlippe (74) auf, welche Dichtlippen (72) und (74) sich axial in Richtung der Betriebsbremskammer erstrecken. Die äußere Dichtlippe (52) dient zur Abdichtung des Ventilkörpers (73) gegenüber dem Kolben, der zu diesem Zweck wieder den als zylindrische Bohrung ausgebildeten Bereich (51) aufweist. Die innere Dichtlippe (74) dient zur Abdichtung zwischen Dichtelement (75) und Innenteil (72).

Die Schulter (75a) wird durch die auf das Schließglied (70) zuweisende axiale Stirnfläche des Dichtelements (75) gebildet, aus welcher das Ende (Dichtlippe 71), mit dem das Dichtelement (75) das Ventil (73, 70) bildet, hervorsteht. Die Gegenschulter (72a) ist als Flanke eines umlaufenden Flansches des Innenteils (72) ausgebildet. Durch eine radiale Aussparung (78) in diesem Flansch, wie sie in Fig. 4a erkennbar ist, tritt das Dichtelement mit seinem zur Bildung des Ventils (73, 70) dienenden Ende (Dichtlippe 71) hindurch.

Hinsichtlich der Wirkungsweise dieses Ausführungsbeispiels gilt das oben Gesagte entsprechend.

Fig. 4b zeigt als vergrößertes Detail aus Fig. 4 eine vorteilhafte Weiterbildung dieses Ausführungsbeispiels. Das Dichtelement (75) überragt an seinem zur Bildung des Ventils (73, 70) dienenden Ende (Dichtlippe 71) des Innenteil (72) in Richtung des Schließglieds (70) um ein Maß "b". Das Schließen des Ventils (73, 70) unter der Einwirkung des Drucks in der Betriebsbremskammer erfolgt durch Anlegen des zur Bildung des Ventils (73, 70) dienenden Endes (Dichtlippe 71) des Dichtelements (75) an das Schließglied (70). Bei weiter steigendem Druck in der Betriebsbremskammer wird dieses Ende (Dichtlippe 71) verformt, d.h. zusammengedrückt. Erreicht die Verformung das Maß "b", so legt sich das Innenteil (72) an das Schließglied (70) an mit der Folge, daß eine Verformung des Endes (Dichtlippe 71) des Dichtelements (75) über das Maß "b" hinaus nicht möglich ist. Das zur Bildung des Ventils (73, 70) dienende Ende (Dichtlippe 71) des Dichtelements (75) wird also nach Verformung um das Maß "b" vor weiterer Verformung und damit weiterer Belastung geschützt. Diese Ausgestaltung dient damit zur Verbesserung der Betriebssicherheit und der Erhöhung der Lebensdauer der Beatmungseinrichtung. Durch Auslegung des Maßes "b" kann die Höchstbelastung des Endes (Dichtlippe 71) vorbestimmt werden.

Zur Förderung der soeben beschriebenen Begrenzungswirkung besteht das Innenteil (72) aus einem Werkstoff mit geringerer Dehnung, d.h. größerem Elastizitätsmodul, als das Dichtelement (75). Als geeigneter Werkstoff für das Innenteil (72) kommen insbesondere ein Metall oder ein Hartkunststoff wie POM oder Delrin infrage.

Es liegt auf der Hand, daß die erforderliche

- Abdichtung zwischen Dichtelement und Innenteil,

- Übertragbarkeit von Kräften zwischen Dichtelement und Innenteil in Schließ- bzw. Öffnungsrichtung des Ventils,

- Abdichtung des Ventilglieds im Kolben,

auch auf jede andere geeignete Art erzielbar sind. So können beispielsweise Dichtelement und Innenteil, statt wie im Ausführungsbeispiel gegeneinander verschiebbar, fest und dicht miteinander verbunden, beipielsweise zusammenvulkanisiert, sein. Auch einteilig läßt sich der Ventilkörper dieses Ausführungsbeispiels ausführen, in welchem Falle das Ausführungsbeispiel im wesentlichen demjenigen nach Fig. 3 entspricht.

Fig. 4a zeigt, daß das Ausführungsbeispiel vier Drosselkanäle (4) aufweist, deren jedem ein eigenes Ventil (73, 70) und ein eigener Durchbruch (78) zugeordnet ist. Es liegt auf der Hand, daß auch jede andere Anzahl dieser Elemente ausführbar ist, sofern sie die Funktion sicherstellt.

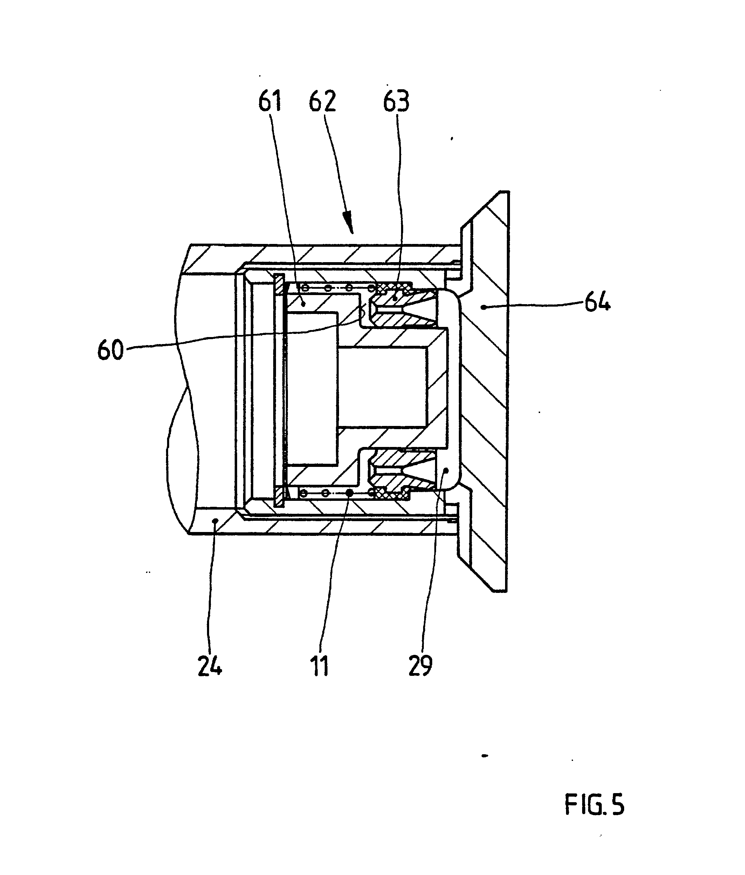

In Fig. 5 ist eine Beatmungsvorrichtung dargestellt, die, wie diejenige nach Fig. 2, einen nach Art eines Ringkolbens ausgebildeten Ventilkörper (63) aufweist, der in einer im Hohlraum der Kolbenstange angeordneten Ringnut verschiebbar geführt ist. Die Ringnut ist in diesem Fall in dem Druckstück (62) angeordnet. Als am Kolben angeordnetes Schließglied (60) des Ventils (63, 60) dient eine Schulter des Druckstücks (62). Das Druckstück (62) besteht aus einem Außenteil und einem Innenteil, zwischen denen die Ringnut gebildet ist. Das Innenteil (61) ist von der Federkammerseite her eingesetzt und weist Durchmesserstufen auf. Mit dem kleinen Durchmesser, der sich am betriebskammerseitigen Ende des Innenteils (61) befindet, bildet es die Innenlauffläche für den Ventilkörper (63). Am federkammerseitigen Ende hat das Innenteil (61) den großen Durchmesser. Zwischen dem kleinen und dem großen Durchmesser befindet sich ein Bereich mit einem mittleren Durchmesser. In diesem Bereich bildet das Innenteil (61) mit dem Außenteil (64) einen Einbauraum für das Federelement. Die Schulter zwischen dem kleinen Durchmesser und dem mittleren Durchmesser bildet das Schließglied (60) des Ventils (63, 60).

Das Innenteil (61) des Druckstücks (62) ist an seinem großen Durchmesser im Außenteil (64) zentriert und mittels der Flanken des Bereichs mit dem großen Durchmesser in an sich bekannter Weise an einer Schulter im Außenteil (64) sowie einem Axialsicherungselement axial fixiert.

In nicht dargestellter Weise kann die das Schließglied bildende Schulter auch am Außenteil des Druckstücks angeordnet sein.

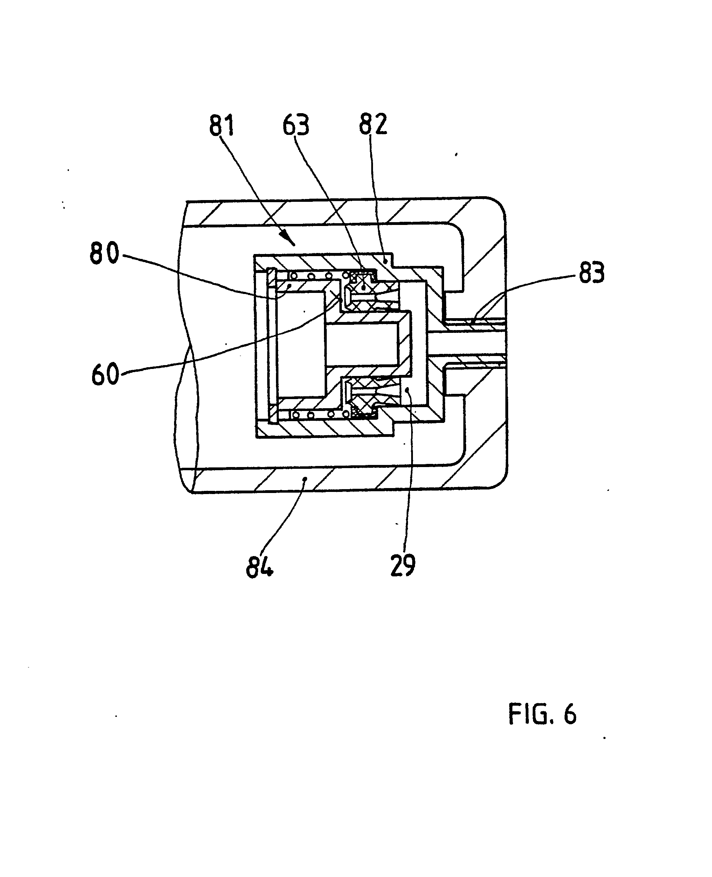

Die Beatmungseinrichtung nach Fig. 6 ist im Hohlraum einer Kolbenstange (84) ohne eingesetztes Druckstück angeordnet. Der wieder nach Art eines Ringkolbens ausgebildete Ventilkörper ist in einer Ringnut verschiebbar, die in einem aus einem Außenteil (82) und einem Innenteil (80) bestehenden Einsatz (81) ausgebildet ist. Für den Einsatz (81) und seine genannten Komponenten sowie die Anordnung des Ventilkörpers gelten die in Fig. 5 zu dem Druckstück sowie dem Ventilkörper gemachten Ausführungen in entsprechender Anwendung. Der Einsatz (81) ist in den Boden des in die Betriebsbremskammer eindringenden Endes der Kolbenstange (84) über eine Schraubverbindung (83) eingeschraubt. Das Außenteil (82) des Einsatzes (81) weist zu diesem Zweck einen nicht näher bezeichneten Gewindestutzen auf, der zur Herstellung der Verbindung zwischen Betriebsbremskammer und Federkammer bzw. Hohlraum der Kolbenstange (84) hohl ist.

Die in den vorstehenden Figurenbeschreibungen für die einzelnen Ausführungsbeispiele gegebenen Erläuterungen gelten, sofern nichts Gegenteiliges ausgesagt ist, auch für alle anderen Ausführungsbeispiele in angepaßter Weise bzw. in entsprechender Anwendung.

Es liegt insbesondere auf der Hand, daß die vorstehend für Kolbenstangen mit Druckstück gemachten Ausführungen für Kolbenstangen ohne Druckstück, d.h. solchen, bei denen wie in Fig. 6 die Übertragung der Kolbenkraft über den Körper der Kolbenstange, beispielsweise einen Boden derselben, erfolgt, entsprechend gelten.

Anders als oben dargestellt, kann der bzw., gegebenenfalls, jeder Drosselkanal auch aus einem nicht kalibrierten Durchbruch des Ventilkörpers und der Durchlaßöffnung des Ventils bestehen, wobei der Öffnungshub des Ventils so bemessen ist, daß die Durchlaßöffnung eine Drossel bildet. In diesem Fall gelten die gemachten Ausführungen über den Drosselkanal für den Durchbruch als Teil des Drosselkanals entsprechend.

Die in den Figuren 2 (untere Figurenhälfte) bis 6 dargestellten Prinzipien lassen sich auch zur Beatmung der Federkammer aus der Lösekammer einsetzen. In diesem Fall könnten eine oder mehrere derartige Beatmungseinrichtungen insbesondere auf dem Kolbenkörper, insbesondere in dessen Wandung zwischen Lösekammer und Federkammer, angeordnet bzw. verteilt sein.

Es liegt auch auf der Hand, daß eine den Figuren 3 bis 6 entsprechende Ausgestaltung auch in anderen Bereichen der Kolbenstange als im Druckstück angeordnet sein kann. Auch kann jede der Ausgestaltungen nach den Figuren 3 bis 6 auch außerhalb des in die Betriebsbremskammer eindringenden Endes der Kolbenstange angeordnet sein.

Es ist offenkundig, daß der Anwendungsbereich der Erfindung in den vorstehenden Ausführungsbeispielen nicht erschöpfend dargestellt ist, sondern auch alle anderen Ausgestaltungen umfaßt, deren Merkmale sich den Patentansprüchen unterordnen.

## Patentansprüche

1. Beatmungsvorrichtung für einen Federspeicherbremszylinder (1), mit oder ohne vor- oder nachgeschalteten Betriebsbremsteil mit einem durch eine Speicherfeder (2) betätigbaren Kolben (5), der den Federspeicherbremszylinder (1) in eine Lösekammer (6) und eine die Speicherfeder (2) aufnehmende Federkammer (10) aufteilt, wobei die Beatmungseinrichtung wenigstens einen im Kolben (5) angeordneten Drosselkanal (4), über welchen bei Druckentlastung der Lösekammer (6) eine Beatmung der Federkammer (10) aus der Lösekammer (6) herbeiführbar ist, und wenigstens ein von einem am Kolben (5) angeordneten Schließglied (14) und einem Ventilkörper (3) gebildetes Ventil (3, 14) zum Öffnen und Absperren des Drosselkanaldurchgangs aufweist, wobei der Ventilkörper (3) im Kolben (5) verschiebbar geführt ist und durch seine Verschiebung das Ventil (3, 14) öffnet und schließt und wobei der Ventilkörper (3) durch ein Federelement (11) in Öffnungsrichtung des Ventils (3, 14) und durch den Druck in der Lösekammer (6) in Schließrichtung des Ventils (3, 14) vorgespannt ist, dadurch gekennzeichnet, daß der Ventilkörper (3, 20) im Kolben (5, 23) abgedichtet geführt und wenigstens von einem Teil des Drosselkanals durchdrungen ist.

2. Beatmungsvorrichtung für einen Federspeicherbremszylinder (1), der mit einem vor- oder nachgeschalteten Betriebsbremszylinder (25), welcher eine Betriebsbremskammer aufweist, baulich vereinigt ist, wobei der Federspeicherbremszylinder (1) einen durch eine Speicherfeder (2) betätigbaren Kolben (23) aufweist, der den Federspeicherbremszylinder (1) in eine Lösekammer (6) und eine die Speicherfeder (2) aufnehmende Federkammer (10) aufteilt, wobei die Beatmungseinrichtung wenigstens einen im Kolben (23) angeordneten Drosselkanal (4), über welchen bei Druckentlastung der Lösekammer (6) eine Beatmung der Federkammer (10) aus der Betriebsbremskammer (26) herbeiführbar ist, und wenigstens ein von einem am Kolben (23) angeordneten Schließglied (31) und einem Ventilkörper (30, 53, 63, 73) gebildetes Ventil zum Öffnen und Absperren des Drosselkanaldurchgangs aufweist, wobei der Ventilkörper (30, 53, 63, 73) im Kolben (23) verschiebbar geführt ist und durch seine Verschiebung das Ventil öffnet und schließt und wobei der Ventilkörper (30, 53, 63, 73) durch ein Federelement (34) in Öffnungsrichtung des Ventils und durch den Druck in der Betriebsbremskamm in Schließrichtung des Ventils vorgespannt ist, dadurch gekennzeichnet, daß der Ventilkörper (30, 53, 63, 73) im Kolben (23) abgedichtet geführt und wenigstens von einem Teil des Drosselkanals durchdrungen ist.

3. Beatmungsvorrichtung nach einem der Ansprüche 1 oder 2, dadurch gekennzeichnet, daß der Drosselkanal (4) als kalibrierter Durchbruch des Ventilkörpers (3, 20, 30, 53, 63, 73) ausgebildet ist.

4. Beatmungsvorrichtung nach einem der Ansprüche 1 oder 2, dadurch gekennzeichnet, daß der Drosselkanal (4) aus dem den Ventilkörper (30, 53, 63, 73) durchdringenden Teil und der Durchlaßöffnung des Ventils besteht und daß der Öffnungshub des Ventils so bemessen ist, daß dessen Durchlaßöffnung eine Drossel bildet.

5. Beatmungsvorrichtung nach Anspruch 1, dadurch gekennzeichnet, daß der Ventilkörper (3) in einer einerseits mit der Lösekammer (6) und andererseits mit der Federkammer (10) verbundenen zylindrischen Kolbenbohrung angeordnet ist und daß als Schließglied des Ventils eine den Hub des Ventilkörpers (3) in Richtung Federkammer (10) begrenzende Schulter des Kolbens (5) dient.

6. Beatmungsvorrichtung nach Anspruch 1, dadurch gekennzeichnet, daß der Ventilkörper (3) nach Art eines Ringkolbens ausgebildet und in einer einerseits mit der Lösekammer (6) und andererseits mit der Federkammer (10) verbundenen Ringnut (8) angeordnet ist und daß als Schließglied (14) des Ventils (3, 14) eine den Hub des Ventilkörpers (3) in Richtung Federkammer (10) begrenzende Schulter des Kolbens (5) dient.

7. Beatmungsvorrichtung nach Anspruch 6, dadurch gekennzeichnet, daß die Ringnut (8) koaxial zum Kolben (5) angeordnet ist.

8. Beatmungsvorrichtung nach Anspruch 2, wobei der Kolben eine hohle, abgedichtet in die Betriebsbremskammer eindringende, Kolbenstange (24, 55; 24, 76) aufweist, dadurch gekennzeichnet, daß
a) der Hohlraum (50) der Kolbenstange (24, 55; 24, 76) einerseits mit der Betriebsbremskammer und andererseits mit der Federkammer verbunden ist;
b) der Ventilkörper (53, 73) in einem als zylindrische Bohrung ausgebildeten Bereich (51) im Hohlraum (50) der Kolbenstange (24, 55; 24, 76) angeordnet ist;
c) als Schließglied (54, 70) des Ventils (53, 54;

73, 70) eine in den Hohlraum (50) der Kolbenstange (24, 55; 24, 76) hineinragende und den Hub des Ventilkörpers (53, 73) in Richtung Federkammer begrenzende Schulter des Kolbens dient.

9. Beatmungsvorrichtung nach Anspruch 2, wobei der Kolben eine hohle, abgedichtet in die Betriebsbremskammer eindringende Kolbenstange (24, 62; 84) aufweist, dadurch gekennzeichnet, daß
a) im Hohlraum der Kolbenstange (24, 62; 84) eine einerseits mit der Betriebsbremskammer und andererseits mit der Federkammer verbundene Ringnut (29) gebildet ist;
b) der Ventilkörper (63) nach Art eines Ringkolbens ausgebildet und in der Ringnut (29) angeordnet ist;
c) als Schließglied (60) des Ventils (63, 60) eine in den Hohlraum der Kolbenstange (24, 62; 84) hineinragende und den Hub des Ventilkörpers (63) in Richtung Federkammer begrenzende Schulter des Kolbens dient.

10. Beatmungsvorrichtung nach einem der Ansprüche 8 oder 9, dadurch gekennzeichnet, daß die Schulter (54, 60, 70) an der Kolbenstange (24, 55; 24, 76; 24, 62) angeordnet ist.

11. Beatmungsvorrichtung nach Anspruch 8, wobei der Kolben an der hohlen Kolbenstange (24, 55; 24, 76) an ihrem in die Betriebsbremskammer eindringenden Ende ein der Übertragung der Kolbenkraft dienendes abgedichtet eingesetztes Druckstück (55, 76) mit hohlem Innenraum aufweist, dadurch gekennzeichnet, daß der Ventilkörper (53, 73) im Hohlraum des Druckstücks (55, 76) angeordnet ist.

12. Beatmungsvorrichtung nach Anspruch 11, dadurch gekennzeichnet, daß die als Schließglied (54, 70) des Ventils (53, 54; 73, 70) dienende Schulter des Kolbens am Druckstück (55, 76) ausgebildet ist.

13. Beatmungsvorrichtung nach Anspruch 9, wobei der Kolben an der hohlen Kolbenstange (24, 62) an ihrem in die Betriebsbremskammer eindringenden Ende ein der Übertragung der Kolbenkraft dienendes abgedichtet eingesetztes Druckstück (62) mit hohlem Innenraum aufweist, dadurch gekennzeichnet, daß die Ringnut (29) im Druckstück (62) ausgebildet ist.

14. Beatmungsvorrichtung nach Anspruch 13, dadurch gekennzeichnet, daß das Druckstück (62) aus einem Außenteil (64) und einem Innenteil (61) besteht und daß die Ringnut (29) zwischen dem Außenteil (64) und dem Innenteil (61) gebildet ist.

15. Beatmungsvorrichtung nach Anspruch 14, dadurch gekennzeichnet, daß die als Schließglied (60) des Ventils (63, 60) dienende Schulter des Kolbens am Innenteil (61) des Druckstücks (62) angeordnet ist.

16. Beatmungsvorrichtung nach Anspruch 14, dadurch gekennzeichnet, daß die als Schließglied des Ventils dienende Schulter des Kolbens am Außenteil des Druckstücks angeordnet ist.

17. Beatmungsvorrichtung nach einem der vorhergehenden Ansprüche, dadurch gekennzeichnet, daß das den Ventilkörper vorspannende Federelement (77) sich zwischen der als Schließglied des Ventils dienenden Schulter und dem Ventilkörper (73) abstützt.

18. Beatmungsvorrichtung nach einem der vorhergehenden Ansprüche, dadurch gekennzeichnet, daß das den Ventilkörper (3) vorspannende Federelement (11) sich zwischen einer weiteren Schulter (12) des Kolbens (5) und dem Ventilkörper (3) abstützt.

19. Beatmungsvorrichtung nach einem der Ansprüche 8 bis 18, dadurch gekennzeichnet, daß

a) der Ventilkörper (73) aus einem ringförmigen Dichtelement (75) und einem Innenteil (72) besteht;

b) das Dichtelement (75) wenigstens den Teil des Drosselkanals aufweist;

c) das Federelement (77) sich am Innenteil (72) abstützt;

d) das Innenteil (72) das Dichtelement (75) abgedichtet durchdringt;

e) das Dichtelement (75) mit seinem auf das Schließglied (70) zu gerichteten Ende (Dichtlippe 71) mit dem Schließglied (70) das Ventil (73, 70) bildet;

f) das Dichtelement (75) und das Innenteil (72) über eine Schulter (75a) am Dichtelement (75) und eine Gegenschulter (72a) am Innenteil (72) derart in Eingriff stehen, daß das Innenteil (72) das Dichtelement (75) in Öffnugnsrichtung des Ventils (73, 70) mitnimmt und das Dichtelement (75) die an ihm vom Druck in der Betriebsbremskammer hervorgerufene Kraft auf das Innenteil (72) überträgt.

20. Beatmungsvorrichtung nach Anspruch 19, dadurch gekennzeichnet, daß das Dichtelement (75) an seinem auf das Schließglied (70) zu gerichteten Ende (Dichtlippe 71) das Innenteil (72) in Richtung des Schließglieds (70) um ein Maß (b) überragt und daß nach Zusammendrücken dieses Endes (Dichtlippe 71) um das Maß (b) durch die Einwirkung des Drucks in der Betriebsbremskammer das Innenteil (72) sich an das Schließglied (70) anlegt.

21. Beatmungsvorrichtung nach einem der Ansprüche 19 oder 20, dadurch gekennzeichnet, daß für das Innenteil (72) ein Werkstoff mit geringerer Dehnung als für das Dichtelement (75), beispielsweise ein Metall oder ein Hartkunststoff wie POM oder Delrin, eingesetzt wird.

22. Beatmungsvorrichtung nach einem der Ansprüche 19 bis 21, dadurch gekennzeichnet, daß das Dichtelement (75) nach Art einer Nutmanschette ausgebildet ist und zur Abdichtung des Ventilkörpers (73) gegenüber dem Kolben (Bereich 51) eine im wesentlichen radial nach außen gerichtete umlaufende Dichtlippe (52) und zu seiner Abdichtung gegenüber dem Innenteil (72) eine im wesentlichen radial nach innen gerichtete umlaufende Dichtlippe (74) aufweist, welche Dichtlippen (72) und (74) sich axial in Richtung der Betriebsbremskammer erstecken.

23. Beatmungsvorrichtung nach einem der Ansprüche 1 bis 5, 8, 10 bis 12, 17 bis 18, dadurch gekennzeichnet, daß der Ventilkörper (53) zu seiner Abdichtung gegenüber dem Kolben (Bereich 51) nach Art einer Topfmanschette eine radial im wesentlichen nach außen gerichtete, axial sich in Richtung der Lösekamme bzw. der Betriebsbremskammer erstreckende umlaufende Dichtlippe (52) aufweist.

24. Beatmungsvorrichtung nach einem der Ansprüche 1 bis 4, 6 bis 7, 9 bis 10, 13 bis 18, dadurch gekennzeichnet, daß der Ventilkörper (3, 20, 30, 63) zu seiner Abdichtung gegenüber dem Kolben nach Art einer Nutmanschette eine im wesentlichen radial nach außen und eine im wesentlichen radial nach innen gerichtete umlaufende Dichtlippe (42) bzw. (41) aufweist, die sich axial in Richtung der Lösekammer bzw. der Betriebsbremskammer erstecken.

25. Beatmungsvorrichtung nach einem der vorhergehenden Ansprüche, dadurch gekennzeichnet, daß der Ventilkörper (30) bzw. das Dichtelement (75) an ihrem auf das Schließglied (31) bzw. (70) zu gerichteten Ende eine konzentrisch zur Mündung des den Ventilkörper (30) bzw. das Dichtelement (75) durchdringenden wenigstens Teils des Drosselkanals angeordnete, um die Mündung herumlaufende Dichtlippe (40) bzw. (71) aufweisen, mittels derer der Ventilkörper (30) bzw. das Dichtelement (75) das Ventil (30, 31) bzw. (73, 70) bilden.

26. Beatmungsvorrichtung nach einem der Ansprüche 1 bis 24, dadurch gekennzeichnet, daß der Ventilkörper bzw. das Dichtelement an ihrem auf das Schließglied zu gerichteten Ende je einen sich axial erstreckenden radial äußeren und radial inneren umlaufenden Ventilsitz aufweisen, die zwischen sich eine Ringfläche einschließen, in welche der den Ventilkörper bzw. das Dichtelement durchdringende wenigstens Teil des Drosselkanals mündet.

27. Beatmungsvorrichtung nach einem der vorhergehenden Ansprüche, dadurch gekennzeichnet, daß das Federelement als axial zwischen dem Ventilkörper (20, 30) und einer Schulter des Kolbens (5, 23) angeordneter Federring (31, 34) ausgebildet ist, welcher bei Druckbeaufschlagung der Lösekammer (6) bzw. der Betriebsbremskammer (26) von dem Ventilkörper (20, 30) plangepreßt wird und dadurch zugleich als Schließglied des Ventils (20 ,34; 30, 31) dient.

## Claims

1. A breathing arrangement for a spring brake cylinder (1), with or without an upstream or downstream service brake part, having a piston (5) arranged to be actuated by pre-stressed spring (2), which piston divides the spring brake cylinder (1) into a release chamber (6) and a spring chamber (10) containing the pre-stressed spring (2), the breathing arrangement having at least one throttle channel (4) arranged in the piston (5) through which, when the release chamber (6) is relieved of pressure, a ventilation of the spring chamber (10) via the release chamber (10) can be achieved, and at least one valve (3, 14) formed by a closure member (14) arranged on the piston (5) and a valve body (3) for opening and shutting off the passage through the throttle channel, the valve body (3) being displaceably guided in the piston (5) and through its displacement opening and closing the valve (3, 14), and the valve body (3) being biased by a spring element (11) in the opening direction of the valve (3, 14) and by the pressure in the release chamber (6) in the closing direction of the valve (3, 14), characterized in that the valve body (3, 20) is guided in a sealed manner in the piston (5, 23) and is penetrated by at least a part of the throttle channel.

2. A breathing arrangement for a spring brake cylinder (1) which is structurally combined with an upstream or downstream service brake cylinder (25) which has a service brake chamber, the spring brake cylinder (1) having a piston (23) which is arranged to be actuated by a pre-stressed spring (2) and which divides the spring brake cylinder (1) into a release chamber (6) and a spring chamber (10) receiving the pre-stressed spring (2), the breathing arrangement having at least one throttle channel (4) arranged in the piston (23) through which, when the release chamber (6) is relieved of pressure, a ventilation of the spring chamber (10) via the service brake chamber (26) can be induced, and at least one valve formed by a closure member (31) arranged on the piston (23) and a valve body (30, 53, 63, 73) for opening and shutting off the passage through the throttle channel, the valve body (30, 53, 63, 73) being displaceably guided in the piston (23) and by its displacement opening and shutting off the valve, and the valve body (30, 53, 63, 73) being biassed by a spring element (34) in the opening direction of the valve and by the pressure in the service brake chamber in the closing direction of the valve, characterized in that the valve body (30, 53, 63, 73) is guided in a sealed manner in the piston (23) and is penetrated by at least a part of the throttle channel.

3. A breathing arrangement according to one of claims 1 or 2, characterized in that the throttle channel (4) is constructed as a calibrated opening of the valve body (3, 20, 30, 53, 63, 73).

4. A breathing arrangement according to one of claims 1 or 2, characterized in that the throttle channel (4) consists of the part of the channel penetrating the valve body (30, 53, 63, 73) and the through opening of the valve, and the opening stroke of the valve is rated so that its through opening forms a throttle.

5. A breathing arrangement according to claim 1, characterized in that the valve body (3) is arranged in a cylindrical piston bore connected at one end to the release chamber (6) and at the other end to the spring chamber (10), and a shoulder of the piston (5) limiting the stroke of the valve body (3) in the direction of the spring chamber (10) serves as closure member (14) of the valve.

6. A breathing arrangement according to claim 1, characterized in that the valve body (3) is constructed as an annular piston and is arranged in an annular groove (8) connected at one end to the release chamber (6) and at the other end to the spring chamber (10), and a shoulder of the piston (5) limiting the stroke of the valve body (3) in the direction of the spring chamber (10) serves as closure member (14) of the valve (3, 14).

7. A breathing arrangement according to claim 6, characterized in that the annular groove (8) is arranged coaxially with respect to the piston (5).

8. A breathing arrangement according to claim 2, wherein the piston has a hollow piston rod (24, 55; 24, 76) penetrating the service brake chamber in a sealed manner, characterized in that

a) the hollow space (25) of the piston rod (24, 55; 24, 76) is connected at one end to the service brake chamber and at the other end to the spring chamber;

b) the valve body (53, 73) is arranged, in a region (51) constructed as a cylindrical bore, in the hollow space (50) of the piston rod (24, 55; 24, 76);

c) a shoulder of the piston penetrating the hollow space (50) of the piston rod (24, 55; 24, 76) and limiting the stroke of the valve body (53, 73) in the direction of the spring chamber serves as closure member (54, 70) of the valve (53, 54; 73, 70).

9. A breathing arrangement according to claim 2, wherein the piston has a hollow piston rod (24, 62; 84) penetrating the service brake chamber in a sealed manner, characterized in that

a) in the hollow space of the piston rod (24, 62; 84) there is formed an annular groove (29) connected at one end to the service brake chamber and at the other end to the spring chamber;

b) the valve body (63) is constructed as an annular piston and is arranged in the annular groove (29);

c) a shoulder of the piston penetrating the hollow space of the piston rod (24, 62; 84) and limiting the stroke of the valve body (63) in the direction of the spring chamber serves as closure member (60) of the valve (63, 60).

10. A breathing arrangement according to one of claims 8 or 9, characterized in that the shoulder (54, 60, 70) is arranged on the piston rod (24, 55; 24, 76; 24, 62).

11. A breathing arrangement according to claim 8, wherein on the hollow piston rod (24, 55; 24, 76) at its end entering the service brake chamber the piston has a thrust piece (55, 76) with a hollow internal space, which thrust piece is fitted in a sealed manner and serves to transfer the piston force, characterized in that the valve body (53, 73) is arranged in the hollow space of the thrust piece (55, 76).

12. A breathing arrangement according to claim 11, characterized in that the shoulder of the piston serving as closure member (54, 70) of the valve (53, 54; 73, 70) is formed on the thrust piece (55, 76).

13. A breathing arrangement according to claim 9, wherein on the hollow piston rod (24, 62) at its end entering the service brake chamber the piston has a thrust piece (62) with a hollow internal space, which thrust piece is fitted in a sealed manner and serves to transfer the piston force, characterized in that the annular groove (29) is formed in the thrust piece (62).

14. A breathing arrangement according to claim 13, characterized in that the thrust piece (62) consists of an outer part (64) and an inner part (61), and the annular groove (29) is formed between the outer part (64) and the inner part (61).

15. A breathing arrangement according to claim 14, characterized in that the shoulder of the piston serving as closure member (60) of the valve (63, 60) is arranged on the inner part (61) of the thrust piece (62).

16. A breathing arrangement according to claim 14, characterized in that the shoulder of the piston serving as closure member of the valve is arranged on the outer part of the thrust piece.

17. A breathing arrangement according to one of the preceding claims, characterized in that the spring element (77) biassing the valve body (31) is braced between the shoulder serving as closure member of the valve and the valve body (73).

18. A breathing arrangement according to one of the preceding claims, characterized in that the spring element (11) biassing the valve body (3) is braced between a further shoulder (12) of the piston (5) and the valve body (3).

19. A breathing arrangement according to one of claims 8 to 18, characterized in that

a) the valve body (73) consists of an annular sealing element (75) and an inner part (72);

b) the sealing element (75) includes at least the part of the throttle channel;

c) the spring element (77) braces itself on the inner part (72);

d) the inner part (72) penetrates the sealing element (75) in a sealed manner;

e) with its end (sealing lip 71) directed towards the closure element (70) the sealing element (75) forms with the closure element (70) the valve (73, 70);

f) the sealing element (75) and the inner part (72) engage by means of a shoulder (75a) on the sealing element (75) and a counter-shoulder (72a) on the inner part (72) in such a manner that the sealing element (75) carries the inner part (72) with it in the opening direction of the valve (73, 70) and the sealing element (75) transfers the force produced at it by the pressure in the service brake chamber to the inner part (72).

20. A breathing arrangement according to claim 19, characterized in that, at its end (sealing lip 71) directed towards the closure element (70), the sealing element (75) projects beyond the inner part (72) in the direction of the closure member (70) by an amount (b) and, after this end (sealing lip 71) has been compressed by the amount (b) through the effect of the pressure in the service brake chamber, the inner part (72) positions itself against the closure member (70).

21. A breathing arrangement according to one of claims 19 or 20, characterized in that, for the inner part (72), a material of lower extensibility than for the sealing element (75) is used, for example a metal or a hard plastics such as POM or Delrin.

22. A breathing arrangement according to one of claims 19 to 21, characterized in that the sealing element (75) is constructed in the manner of a grooved sleeve and to seal the valve body (73) from the piston (region 51) has an essentially radially outwardly directed circumferential sealing lip (52) and to seal it from the inner part (72) has an essentially radially inwardly directed circumferential sealing lip (74), which sealing lips (72) and (74) extend axially in the direction of the service brake chamber.

23. A breathing arrangement according to one of claims 1 to 5, 8, 10 to 12, 17 to 18, characterized in that, to seal it with respect to the piston (region 51), the valve body (53) has, in the manner of a cup sleeve, a radially directed, essentially outwardly directed circumferential sealing lip (52) extending axially in the direction of the release chamber and the service brake chamber respectively.

24. A breathing arrangement according to one of claims 1 to 4, 6 to 7, 9 to 10, 13 to 18, characterized in that, to seal it with respect to the piston the valve body (3, 20, 30, 63) has, in the manner of a grooved sleeve, an essentially radially outwardly directed circumferential sealing lip (42) and an essentially radially inwardly directed circumferential sealing lip (41), which sealing lips extend in the direction of the release chamber and the service brake chamber respectively.

25. A breathing arrangement according to one of the preceding claims, characterized in that, at their ends directed towards the closure member (31) and (70) respectively, the valve body (30) and the sealing element (75) have respective sealing lips (40) and (71) arranged concentrically with respect to the mouth of the part of the throttle channel penetrating the valve body (30) and the sealing element (75) respectively and extending around the mouth, by means of which sealing lips the valve body (30) and the sealing element (75) form the valve (30, 31) and (73, 70) respectively.

26. A breathing arrangement according to one of claims 1 to 24, characterized in that, at their end directed towards the closure member, the valve body and the sealing element each have an axially extending, radially outer and radially inner circumferential valve seat which between them enclose an annular face into which the part of the throttle channel penetrating the valve body and the sealing element respectively opens out.

27. A breathing arrangement according to one of the preceding claims, characterized in that the spring element is constructed as a spring ring (31, 34) arranged axially between the valve body (20, 30) and a shoulder of the piston (5, 23), which spring ring, when the release chamber (6) and the service brake chamber (26) are pressurized, is pressed flat by the valve body (20, 30) and thereby serves at the same time as closure member of the valve (20, 34; 30, 31).

## Revendications

1. Dispositif de respiration pour un cylindre (1) de frein à accumulateur à ressort, avec ou sans partie frein de marche montée en amont ou en aval, avec un piston (5) qui peut être actionné par un ressort-accumualteur (2) et qui partage le cylindre (1) du frein à accumulateur à ressort en une chambre de desserrage (6) et en une chambre de ressort (10) recevant le ressort-accumualteur (2), le dispositif de respiration présentant au moins un canal d'étranglement (4) qui est agencé dans le piston (5) et par lequel, lors d'une décharge de pression de la chambre de desserrage (6), une respiration de la chambre de ressort (10) est réalisable à partir de la chambre de de desserrage (6), et présentant au moins une soupape (3, 14) constituée par un organe de fermeture (14) agencé sur le piston (5) et par un corps-soupa-

12

pe (3), pour ouvrir et fermer le passage du canal d'étranglement, le corps-soupape (3) étant guidé à coulissement dans le piston (5) et, par son coulissement, ouvrant la soupape (3, 14) et la fermant, et le corps-soupape (3) étant précontraint par un élément élastique (11), dans le sens de l'ouverture de la soupape (3, 14), et par la pression dans la chambre de desserrage (6) dans le sens de la fermeture de la soupape (3, 14), caractérisé par le fait que le corps-soupape (3, 20) est guidé avec étanchéité dans le piston (5, 23) et traversé au moins par une partie du canal d'étranglement.

2. Dispositif de respiration pour un cylindre (1) de frein à ressort-accumulateur, réuni par construction à un cylindre (25) de frein de marche monté en amont ou en aval, présentant une chambre de frein de marche, le cylindre (1) de frein à ressort-accumulateur présentant un piston (23) qui peut être actionné par un ressort-accumulateur (2) et qui partage le cylindre (1) du frein à ressort-accumulateur en une chambre de desserrage (6) et en une chambre de ressort (10) recevant le ressort-accumulateur (2), le dispositif de respiration présentant au moins un canal d'étranglement (4) qui est agencé dans le piston (23) et par lequel, en cas de décharge de pression de la chambre de desserrage (6), une respiration de la chambre de ressort (10) est réalisable à partir de la chambre (26) du frein de marche, et présentant, pour ouvrir et fermer le passage du canal d'étranglement, au moins une soupape constituée par un organe de fermeture (31) agencé sur le piston (23) et par un corps-soupape (30, 53, 63, 73), le corps-soupape (30, 53, 63, 73) étant guidé à coulissement dans le piston (23) et ouvrant et fermant la soupape par son coulissement, et le corps-soupape (30, 53, 63, 73) étant précontraint par un élément élastique (34), dans le sens de l'ouverture de la soupape, et par la pression dans la chambre de frein de marche, dans le sens de fermeture de la soupape, caractérisé par le fait que le corps-soupape (30, 53, 63, 73) est guidé avec étanchéité dans le piston (23) et traversé au moins par une partie du canal d'étranglement.

3. Dispositif de respiration selon l'une des revendications 1 ou 2, caractérisé par le fait que le canal d'étranglement (4) est réalisé en tant qu'ajour calibré du corps-soupape (3, 20, 30, 53, 63, 73).

4. Dispositif de respiration selon l'une des revendications 1 ou 2, caractérisé par le fait que le canal d'étranglement (4) est constitué par la partie traversant le corps-soupape (30, 53, 63, 73) et par l'ouverture de passage de la soupape, et par le fait que la course d'ouverture de la soupape est dimensionnée de façon que son ouverture de passage constitue un étranglement.

5. Dispositif de respiration selon revendication 1, caractérisé par le fait que le corps-soupape (3) est agencé dans un alésage cylindrique du piston relié d'un côté à la chambre de desserrage (6) et de l'autre côté à la chambre de ressort (10), et par le fait qu'un épaulement du piston (5) limitant la course du corps-soupape (3) en direction de la chambre de ressort (10) sert d'organe de fermeture de la soupape.

6. Dispositif de respiration selon revendication 1, caractérisé par le fait que le corps-soupape (3) est réalisé à la manière d'un piston annulaire et est agencé dans une gorge annulaire (8) reliée d'un côté à la chambre de desserrage (6) et de l'autre côté à la chambre de ressort (10), et par le fait qu'un épaulement du piston (5), limitant la course du corps-soupape (3) en direction de la chambre de ressort (10), sert d'organe de fermeture (14) de la soupape (3, 14).

7. Dispositif de respiration selon revendication 6, caractérisé par le fait que la gorge annulaire (8) est agencée coaxialement au piston (5).

8. Dispositif de respiration selon revendication 2, le piston présentant une tige de piston (24, 55; 24, 76) creuse, pénétrant avec étanchéité dans la chambre du frein de marche, caractérisé par le fait que

a) la cavité (50) de la tige de piston (24, 55; 24, 76) communique d'un côté avec la chambre du frein de marche et de l'autre côté avec la chambre de ressort;

b) le corps-soupape (53, 73) est agencé dans une région (51) aménagée en tant qu'alésage cylindrique dans la cavité (50) de la tige de piston (24, 55; 24, 76);

c) un épaulement du piston, pénétrant dans la cavité (50) de la tige de piston (24, 55; 24, 76) et limitant la course du corps-soupape (53, 73) en direction de la chambre de ressort, sert d'organe de fermeture (54, 70) de la soupape (53, 54; 73, 70).

9. Dispositif de respiration selon revendication 2, le piston présentant une tige de piston (24, 62; 84) creuse pénétrant avec étanchéité dans la chambre du frein de marche, caractérisé par le fait que

a) une gorge annulaire (29) reliée d'un côté à la chambre du frein de marche et de l'autre côté à la chambre de ressort est formée dans la cavité de la tige de piston (24, 62; 84);

b) le corps-soupape (63) est réalisé à la manière d'un piston annulaire et est agencé dans la gorge annulaire (29);

c) un épaulement du piston limitant la course du corps-soupape (63) en direction de la chambre de ressort et pénétrant dans la cavité de la tige de piston (24, 62; 84) sert d'organe de fermeture (60) de la soupape (63, 60).

10. Dispositif de respiration selon l'une des revendications 8 ou 9, caractérisé par le fait que l'épaulement (54, 60, 70) est agencé sur la tige de piston (24, 55; 24, 76; 24, 62).

11. Dispositif de respiration selon revendication 8, le piston présentant, sur la tige de piston creuse (24, 55; 24, 76), à son extrémité pénétrant dans la chambre du frein de marche, une pièce de poussée (55, 76) avec cavité intérieure creuse, servant à la transmission de la force du piston, insérée avec étanchéité, caractérisé par le fait que le corps-soupape (53, 73) est agencé dans la cavité de la pièce de poussée (55, 76).

12. Dispositif de respiration selon revendication 11, caractérisé par le fait que l'épaulement du piston, servant d'organe de fermeture (54, 70) de la soupape (53, 54; 73, 70), est aménagé sur la pièce de poussée (55, 76).

13. Dispositif de respiration selon revendication 9, le piston présentant sur la tige de piston creuse (24, 62), en son extrémité pénétrant dans la chambre du frein de marche, une pièce de poussée (62) avec cavité intérieure creuse, servant à transmettre la force du piston, insérée avec étanchéité, caractérisé par le fait que la gorge annulaire (29) est aménagée dans la pièce de poussée (62).

14. Dispositif de respiration selon revendication 13, caractérisé par le fait que la pièce de poussée (62) est constituée par une partie extérieure (64) et par une partie intérieure (61), et par le fait que la gorge annulaire (29) est formée entre la partie extérieure (64) et la partie intérieure (61).

15. Dispositif de respiration selon revendication 14, caractérisé par le fait que l'épaulement du piston servant d'organe de fermeture (60) de la soupape (63, 60) est agencé sur la partie intérieure (61) de la pièce de poussée (62).

16. Dispositif de respiration selon revendication 14, caractérisé par le fait que l'épaulement du piston servant d'organe de fermeture de la soupape est agencé sur la partie extérieure de la pièce de poussée.

17. Dispositif de respiration selon l'une des revendications précédentes, caractérisé par le fait que l'élément élastique (77) précontraignant le corps-soupape prend appui entre l'épaulement servant d'organe de fermeture de la soupape et le corps-soupape (73).

18. Dispositif de respiration selon l'une des revendications précédentes, caractérisé par le fait que l'élément élastique (11) précontraignant le corps-soupape (3) prend appui entre un autre épaulement (12) du piston (5) et le corps-soupape (3).

19. Dispositif de respiration selon l'une des revendications 8 à 18, caractérisé par le fait que

a) le corps-soupape (73) est constitué par un élément d'étanchéité annulaire (75) et par une partie intérieure (72);

b) l'élément d'étanchéité (75) présente au moins la partie du canal d'étranglement;

c) l'élément élastique (77) prend appui sur la partie intérieure (72);

d) la partie intérieure (72) traverse de manière étanche l'élément d'étanchéité (75);

e) par son extrémité (lèvre d'étanchéité 71) dirigée vers l'organe de fermeture (70), l'élément d'étanchéité (75) forme, avec l'organe de fermeture (70), la soupape (73, 70);

f) l'élément d'étanchéité (75) et la partie intérieure (72) sont en prise, par un épaulement (75a) sur l'élément d'étanchéité (75) et par un contre-épaulement (72a) sur la partie intérieure (72), de manière telle que la partie intérieure (72) entraîne l'élément d'étanchéité (75) dans le sens de l'ouverture de la soupape (73, 70), et l'élément d'étanchéité (75) transmet à la partie intérieure (72) la force que la pression dans la chambre du frein de marche engendre sur lui.

20. Dispositif de respiration selon revendication 19, caractérisé par le fait qu'en son extrémité (lèvre d'étanchéité 71) dirigée vers l'organe de fermeture (70), l'élément d'étanchéité (75) déborde au-delà de la partie intérieure (72), en direction de l'organe de fermeture (70), cela d'une valeur (b), et par le fait qu'après compression de cette extrémité (lèvre d'étanchéité 71) de la valeur (b), sous l'effet de la pression dans la chambre du frein de marche, la partie intérieure (72) s'applique contre l'organe de fermeture (70).

21. Dispositif de respiration selon l'une des revendication 19 ou 20, caractérisé par le fait que l'on utilise, pour la partie intérieure (72), une matière à dilatation plus faible que pour l'élément d'étanchéité (75), par exemple un métal ou une matière plastique dure telle que POM ou Delrin.

22. Dispositif de respiration selon l'une des revendications 19 à 21, caractérisé par le fait que l'élément d'étanchéité (75) est réalisé à la manière d'une manchette à gorge et présente, pour l'étanchéité du corps-soupape (73) par rapport au piston (région 51), une lèvre d'étanchéité périmétrique (52), sensiblement dirigée radialement vers l'extérieur, et présente, pour son étanchéité par rapport à la partie intérieure (72), une lèvre d'étanchéité périmétrique (74) sensiblement dirigée radialement vers l'intérieur, ces lèvres d'étanchéité (72) et (74) s'étendant axialement en direction de la chambre du frein de marche.

23. Dispositif de respiration selon l'une des revendications 1 à 5, 8, 10 à 12, 17 à 18, caractérisé par le fait que, pour son étanchéité par rapport au piston (région 51), le corps-soupape (53) présente, à la manière d'une manchette en cuvette, une lèvre d'étanchéité périmétrique (52) dirigée radialement sensiblement vers l'extérieur, s'étendant axialement en direction de la chambre de desserrage ou encore de la chambre du frein de marche.

24. Dispositif de respiration selon l'une des revendications 1 à 4, 6 à 7, 9 à 10, 13 à 18, caractérisé par le fait que, pour son étanchéité par rapport au piston, le corps-soupape (3, 20, 30, 63) présente, à la manière d'une manchette en cuvette, une lèvre d'étanchéité périmétrique (42) dirigée sensiblement radialement vers l'extérieur et une lèvre d'étanchéité (41) dirigée sensiblement radialement vers l'intérieur, lesquelles s'étendent axialement en direction de la chambre de desserrage ou encore de la chambre du frein de marche.

25. Dispositif de respiration selon l'une des revendications précédentes, caractérisé par le fait que le corps-soupape (30) et l'élément d'étanchéité (75) présentent, à leur extrémité dirigée vers l'organe de fermeture (31) ou selon le cas (70), une lèvre d'étanchéité (40), respectivement (71), agencée concentriquement à l'embouchure de la partie du canal d'étranglement traversant le corps-soupape (30) ou selon le cas l'élément d'étanchéité (75), et encerclant l'embouchure, lèvres au moyen desquelles le corps-soupape (30), respectivement l'élément d'étanchéité (75) forment la soupape (30, 31), respectivement (73, 70).

26. Dispositif de respiration selon l'une des revendications 1 à 24, caractérisé par le fait que le corps-soupape ou selon le cas l'élément d'étanchéité présentent, en leur extrémité dirigée vers l'organe de fermeture, chacun un siège de soupape périphérique radialement extérieur et radialement intérieur, s'étendant axialement, qui comprennent entre

EP 0 279 930 B1

eux une surface annulaire dans laquelle débouche la partie du canal d'étranglement traversant le corps-soupape ou, selon le cas, l'élément d'étanchéité.

27. Dispositif de respiration selon l'une des revendications précédentes, caractérisé par le fait que l'élément élastique est réalisé en tant qu'anneau élastique (31, 34) agencé axialement entre le corps soupape (20, 30) et un épaulement du piston (5, 23), cet anneau élastique étant comprimé à plat par le corps-soupape (20, 30) lors de la sollicitation par pression de la chambre de desserrage (6) ou, selon le cas, de la chambre du frein de marche (26), et servant ainsi en même temps d'organe de fermeture de la soupape (20, 34; 30, 31).

FIG. 1

EP 0 279 930 B1

Fig.2

Fig.2a

EP 0 279 930 B1

FIG. 3

EP 0 279 930 B1

Fig. 4

Fig. 4a

Fig. 4b

FIG. 5

FIG. 6